(19) Europäisches Patentamt
European Patent Office
Office européen des brevets

(11) **EP 0 610 702 B1**

(12) **EUROPÄISCHE PATENTSCHRIFT**

(45) Veröffentlichungstag und Bekanntmachung des Hinweises auf die Patenterteilung:
**30.08.2000 Patentblatt 2000/35**

(51) Int. Cl.[7]: **B60R 16/02**, B60Q 1/52, G01S 15/93, B60D 1/36, B60Q 1/48

(21) Anmeldenummer: **94100917.7**

(22) Anmeldetag: **22.01.1994**

(54) **Rückfahr- und Ankuppelhilfseinrichtung für Kraftfahrzeuge**

Device for assisting reversing and coupling trailers to motor vehicles

Dispositif pour faciliter la marche arrière et l'attache des remorques aux véhicules automobiles

(84) Benannte Vertragsstaaten:
**DE FR GB IT SE**

(30) Priorität: **10.02.1993 DE 4303815**

(43) Veröffentlichungstag der Anmeldung:
**17.08.1994 Patentblatt 1994/33**

(73) Patentinhaber: **ROBERT BOSCH GMBH**
**70442 Stuttgart (DE)**

(72) Erfinder:
• **Noll, Martin, Dr. Dipl.-Phys.**
 **D-76461 Muggensturm (DE)**
• **Kanzler, Ulrich, Dipl.-Ing.**
 **D-90547 Stein (DE)**
• **Krockenberger, Klaus, Dipl.-Ing.**
 **D-90547 Stein (DE)**
• **Leinberger, Jürgen, Dipl.-Ing.**
 **D-90441 Nürnberg (DE)**
• **Meyer, Dieter, Ing. (grad.)**
 **D-90537 Feucht (DE)**

(74) Vertreter:
**Friedmann, Jürgen, Dr.-Ing.**
**c/o Robert Bosch GmbH,**
**Postfach 30 02 20**
**70442 Stuttgart (DE)**

(56) Entgegenhaltungen:
**DE-A- 4 201 806**      **US-A- 4 852 901**
**US-A- 5 191 328**

• **PATENT ABSTRACTS OF JAPAN vol. 9, no. 156 (P-368) (1879) 29. Juni 1985 & JP-A-60 031 077 (MATSUSHITA DENKO) 16. Februar 1985**
• **PATENT ABSTRACTS OF JAPAN vol. 10, no. 218 (M-503) (2274) 30. Juli 1986 & JP-A-61 057 440 (MAZDA MOTOR) 24. März 1986**

## Beschreibung

Stand der Technik

Die Erfindung betrifft eine Rückfahr- und Ankuppelhilfseinrichtung, die auf einem Kraftfahrzeug und einer Deichsel eines Anhängers montiert ist, wobei am Kraftfahrzeug Sensoren, ein Steuergerät und eine Anzeige angebracht sind, und wobei an der Deichsel ein Sensor angebracht ist.

Es ist bekannt, Kraftfahrzeuge mit sogenannten Kollisionswarneinrichtungen auszustatten, wobei die Kollisionswarneinrichtungen Ultraschallsensoren enthalten, die den Abstand zu anderen Gegenständen in der näheren Umgebung des Fahrzeuges ermitteln können. Die Kollisionswarneinrichtungen sind dabei so ausgelegt, daß sie bei Unterschreitung eines vorgegebenen Mindestabstandes Warnsignale abgeben. Die bekannten Kollisionswarneinrichtungen, die nach dem Echolotprinzip arbeiten, sind bevorzugt im Fahrzeugheckbereich angebracht und strahlen nach hinten in dem vom Führer des Kraftfahrzeuges nicht einsehbaren Bereich ab. Es kann damit jedoch nur eine Information erhalten werden, die den Fahrer nur ganz allgemein darüber informiert, ob sich im Heckbereich des Kraftfahrzeuges ein Hindernis befindet und welchen Abstand dieses Hindernis zum Kraftfahrzeug besitzt.

Es ist jedoch nachteilig, daß in vielen Fällen, insbesondere beim Ankuppeln eines Fahrzeuges an einen Anhänger, nicht nur die Information, daß ein Hindernis da ist, ausreichend ist, sondern eine Information über die genaue Lage bzw. Position des Hindernisses wünschenswert ist.

Speziell beim Ankuppeln von Anhängern an Zugfahrzeugen treten oft Schäden auf, weil die Kupplung des Kraftfahrzeuges nicht exakt von der Anhängerdeichsel getroffen wird. Da die Anhängerdeichsel, in der Regel eine Ringöse oder ein Kugelkopf, zudem noch eine relativ kleine Abmessung besitzt und schlecht reflektiert, ist das bekannte Echolotverfahren mit Ultraschallsensoren ungeeignet.

Es ist weiterhin auch bereits vorgeschlagen worden, zusätzlich zu den Ultraschallsensoren Infrarotsensoren einzusetzen. Diese haben jedoch den Nachteil, wenn sie nicht beweglich angeordnet sind, daß sie nur einen relativ schmalen Bereich abdecken und so beispielsweise den Deichselkopf eines Anhängers nicht sicher orten können. Darüber hinaus sind Infrarotstrahler sehr verschmutzungsempfindlich, was die Funktionstüchtigkeit gerade im LKW-Einsatz erheblich beeinflußt, und sie reagieren auf Fremdlichteinflüsse, die eine Verwendung bei starker Sonneneinstrahlung fast unmöglich macht.

Aus der US 4,852,901 A, die eine Rückfahr- und Ankuppelhilfseinrichtung nach dem Obergriff des Anspruchs 1 beschreibt, ist eine Ankuppelvorrichtung für einen Anhänger bekannt, bei der zunächst eine Vorrichtung, die auf einer Anhängerdeichsel montiert ist, Infrarotlicht auf entsprechende Sensoren eines Zugfahrzeuges sendet. Mit Hilfe der Sensoren kann nun das Zugfahrzeug in Bezug auf den Anhänger ausgerichtet werden. Anschließend wird ein zweiter Infrarotstrahl von der Anhängerdeichsel zu einem Positionssensor am Zugfahrzeug gesendet, wenn die Kuppelelemente der Fahrzeuge zum Ankuppeln in der richtigen Position stehen.

Vorteile der Erfindung

Der Erfindung liegt die Aufgabe zugrunde, eine Rückfahr- und Ankuppelhilfseinrichtung der gattungsgemäßen Art zu schaffen, mit der in einfacher Weise, selbst bei schwierigen Umgebungsbedingungen, ein sicheres Erkennen und Positionieren eines im rückwärtigen Bereich eines Kraftfahrzeuges befindlichen Kopfes einer Deichsel unter Verwendung nur eines Mediums möglich ist.

Erfindungsgemäß wird die Aufgabe durch die im Kennzeichen des Anspruchs 1 angegebenen Merkmals gelöst.

Es wurde gefunden, daß wenn dem Kraftfahrzeug ein eine Deichsel besitzender Anhänger zugeordnet ist und die Deichsel einen weiteren als Sende- und Empfangseinheit ausgebildeten Ultraschallsensor besitzt, eine genaue Lagepositionierung des Deichselkopfes in bezug auf ein, am Kraftfahrzeug vorhandenes Kupplungsmaul mit großer Genauigkeit möglich ist.

In vorteilhafter Ausgestaltung der Erfindung ist vorgesehen, daß der an der Deichsel befestigte Ultraschallsensor eine Zeitlaufsteuerung und eine eigene Stromversorgung besitzt und damit bei der Ankuppelhilfe der direkte, also der kürzeste, Laufweg zwischen den, am Kraftfahrzeug befestigten Ultraschallsensoren und dem, an der Deichsel befestigten Ultraschallsensor verwendet werden kann. Hierbei ist vorteilhaft, daß durch einen geringen Systemaufwand eine Rückfahrhilfe- und eine Ankuppelhilfefunktion mit einer an sich bekannten Abstandswarnanlage und einem autark arbeitenden Ultraschallsensor realisiert werden kann.

In besonders vorteilhafter Ausgestaltung der Erfindung ist vorgesehen, daß die am Kraftfahrzeug angeordneten Ultraschallsensoren zu einem Zeitpunkt gleichzeitig einen Impuls aussenden, den der Ultraschallsensor, der an der Deichsel angeordnet ist, zu einem zeitversetzten Zeitpunkt erwidert und damit jeweils einen neuen Impuls der am Kraftfahrzeug angeordneten Ultraschallsensoren auslöst. Auf diese Weise ist es vorteilhaft möglich, auf eine zusätzliche Übertragung von Synchronisationsimpulsen mit Hilfe von elektromagnetischen Signalen, beispielsweise Infrarotlicht, zu verzichten.

Weitere vorteilhafte Ausgestaltungen der Erfindung ergeben sich aus den in den Unteransprüchen aufgeführten Merkmalen.

Zeichnung

Die Erfindung wird nachfolgend in einem Ausführungsbeispiel anhand der zugehörigen Zeichnungen näher erläutert. Es zeigen:

Figur 1    ein Blockschaltbild einer Rückfahr- und Ankuppelhilfseinrichtung;

Figur 2    das Meßprinzip der Ankuppelhilfseinrichtung;

Figur 3    den Signalverlauf der Ankuppelhilfseinrichtung;

Figur 4    schematisch die Anordnung der Ultraschallsensoren und

Figur 5    beispielhaft der Meßbereich einer Ankuppelhilfseinrichtung.

Beschreibung des Ausführungsbeispiels

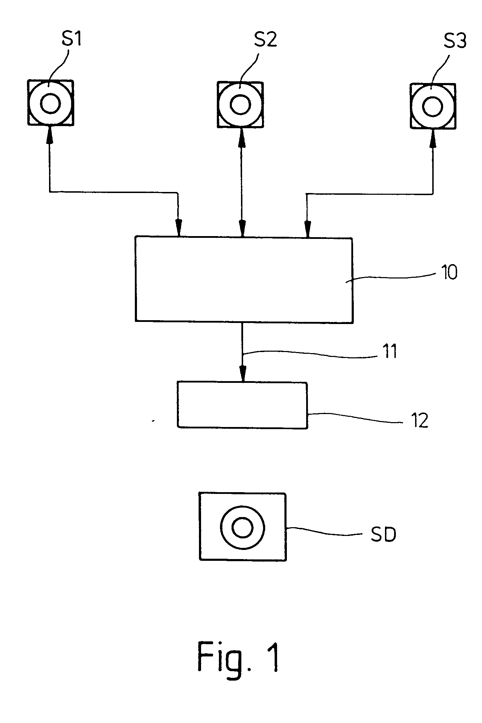

In Figur 1 ist schematisch in einem Blockschaltbild die gesamte Rückfahr- und Ankuppelhilfseinrichtung gezeigt. Diese weist drei Ultraschallsensoren S1, S2, S3 auf, die mit einem Steuergerät 10 gekoppelt sind, das wiederum über eine Leitung 11 mit einem Anzeige-, insbesondere einem Digitalanzeigegerät 12 verbunden ist. Die Ultraschallsensoren S1, S2, S3 sind dabei als Sende- und Empfangseinheiten ausgebildet und an einem, hier nicht dargestellten, Kraftfahrzeug, an dessen Heckseite, vorzugsweise an einem bei Kraftfahrzeugen angeordneten Unterfahrschutz befestigt. Den Ultraschallsensoren S1, S2, S3 ist an einem, hier ebenfalls nicht dargestellten, Anhängefahrzeug ein Ultraschallsensor SD zugeordnet. Der Ultraschallsensor SD ist an der Anhängerdeichsel des Anhängefahrzeuges, insbesondere an einer dort vorgesehenen Halterung angeordnet, so daß er in jedem Fall eine feste Position in bezug zur Ringöse bzw. dem Kugelkopf hat. Der Versatz des Deichselsensors zum Kugelkopf bzw. Ringöse wird beispielsweise softwaremäßig ausgeblendet. Der Ultraschallsensor SD ist dabei ähnlich aufgebaut wie die Ultraschallsensoren S1, S2 , S3, das heißt, er wird ebenfalls als Sende- und Empfangseinheit betrieben, besitzt darüber hinaus jedoch zusätzlich eine als Zeitablaufsteuerung ausgebildete Steuerelektronik und eine eigene Stromversorgung. Die eigene Stromversorgung ist insofern notwendig, da im abgekuppelten Zustand keine Verbindung zwischen dem Anhängefahrzeug und dem Zugfahrzeug besteht. Der Ultraschallsensor SD besitzt weiterhin vorteilhafterweise eine Kontroll-LED-Anzeige, die den Empfang eines Signals und die Funktion des Sensors signalisiert.

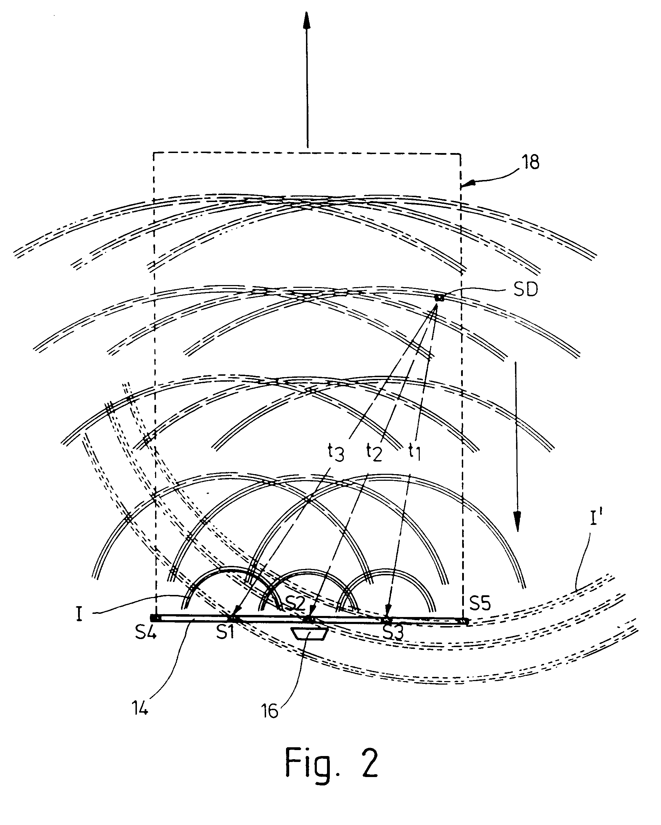

In Figur 2 ist nunmehr das Meßprinzip der in Figur 1 dargestellten schematischen Anordnung näher erläutert. Es ist die als Unterfahrschutz ausgebildete Rückfahrschiene 14 eines wiederum nicht dargestellten Kraftfahrzeuges gezeigt. Die Rückfahrschiene 14 enthält neben den bereits in Figur 1 gezeigten Ultraschallsensoren S1, S2; S3 an ihrem Randbereich weitere Ultraschallsensoren S4, S5. Der Ultraschallsensor S2 befindet sich dabei genau in der Fahrzeugmitte und ist einem Kupplungsmaul 16 einer hier nicht dargestellten Kuppeleinrichtung zugeordnet. Die Anordnung der Ultraschallsensoren S1 bis S5 bestimmt einen Meßbereich 18, innerhalb dessen der, der Deichsel zugeordnete Ultraschallsensor SD geortet werden kann.

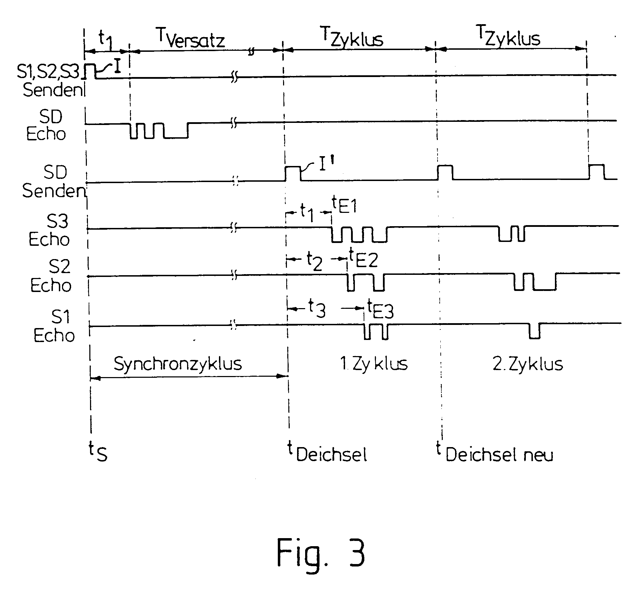

Im Zusammenhang mit dem in Figur 3 gezeigten Signalverlauf soll nunmehr die Funktion der Ankuppelhilfseinrichtung beschrieben werden.

Zu einem Zeitpunkt $t_s$ senden die Ultraschallsensoren S1, S2, S3 einen Impuls I. Zu einem bestimmten Zeitpunkt empfängt der Ultraschallsensor SD den Impuls I und sendet nach einer, über die Zeitablaufsteuerung eingestellten Wartezeit $t_{Versatz}$, in der alle Mehrfachreflektionen zwischen Zugfahrzeug und Anhänger abgeklungen sind, einen Impuls I' zurück. Die Ultraschallsensoren S1, S2, S3 empfangen den Impuls I' des Ultraschallsensors SD zu den Zeitpunkten $t_{E1}$, $t_{E2}$ bzw. $t_{E3}$. Durch die Impulslaufzeit des Impulses I' kann nunmehr die kürzeste Impulslaufzeit zu den Ultraschallsensoren S1, S2 und S3 berechnet werden, wobei im Beispiel die Lage der Deichsel so angenommen wird, daß sie zu dem Ultraschallsensor S3 die kürzeste Entfernung hat.

Für die Berechnung des Sendezeitpunktes des an der Deichsel angeordneten Ultraschallsensors SD gilt nun folgende Beziehung:

$$t_1 = \frac{t_{E1} - t_s - t_{Versatz}}{2}$$

Somit ergibt sich für den Sendezeitpunkt

$$t_{Deichsel} = t_{E1} - t_1.$$

Nachdem somit der Sendezeitpunkt des der Deichsel zugeordneten Ultraschallsensors SD bestimmt ist, ist der Synchronisationszyklus der gesamten Ankuppelhilfseinrichtung abgeschlossen, und es kann für die nunmehr folgenden Zyklen, die jeweils die genaue Lage der Deichsel bestimmen, der Sendezeitpunkt des der Deichsel zugeordneten Ultraschallsensors SD genau vorausberechnet werden.

Für den neuen Sendezeitpunkt ergibt sich die Beziehung

$$t_{Deichsel\ neu} = t_{Deichsel\ alt} + T_{Zyklus}.$$

Um Laufzeitfehler der unabhängig voneinander arbeitenden Ultraschallsensoren S1, S2 und S3 möglichst gering zu halten, und um auch bei eventuellen akustischen Störungen korrekt messen zu können, ist vorgesehen, in festen Zeitabständen die gesamte Ankuppelhilfseinrichtung durch periodisch ausgesendete Synchronisationsimpulse I neu zu synchronisieren. Die hier in den Figuren 2 und 3 dargestellten Zyklen werden so oft wiederholt, bis die an dem Anhänger angeordnete Deichsel mit dem am Kraftfahrzeug angeordneten Kupplungsmaul 16 mechanisch verbunden ist, das heißt, der an der Deichsel angeordnete Ultraschallsensor SD lageidentisch mit dem an der Rückfahrleiste 14 angeordneten Ultraschallsensor S2 ist.

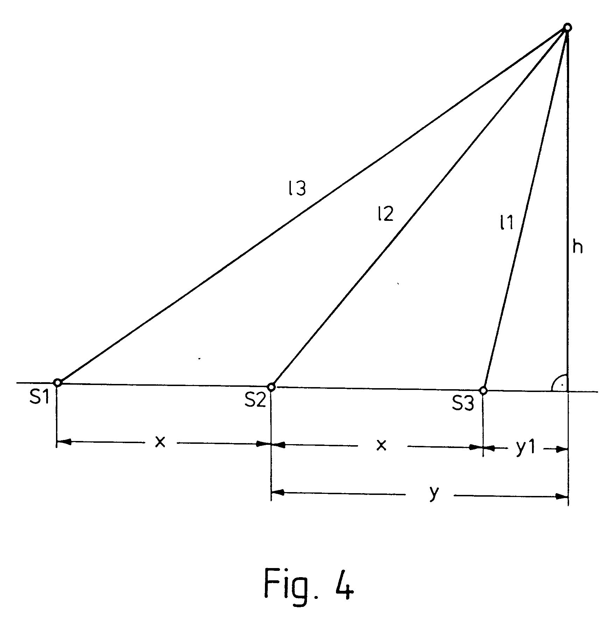

In Figur 4 ist nunmehr die Berechnung des Abstandes und des Seitenversatzes des Ultraschallsensors SD und damit der Deichsel zu dem Kupplungsmaul 16 näher erläutert. Hierbei ist der Abstand der Ultraschallsensoren S1, S2 und S3 zueinander mit x bezeichnet, wobei x vorher bekannt und damit jederzeit konstant ist. Weiterhin ist der Abstand des Ultraschallsensors SD und damit der Deichsel zum Kupplungsmaul 16 mit h bezeichnet und der Seitenversatz zum außen liegenden Ultraschallsensor S3 mit $y_1$ bezeichnet. Die sich ergebenden direkten Abstände des Ultraschallsensors SD zu den Ultraschallsensoren S1, S2 und S3 sind mit $l_1$, $l_2$ und $l_3$ bezeichnet. Die Längen $l_1$, $l_2$, $l_3$ sind dadurch bekannt, daß über eine Umrechnung der Zeiten $t_1$, $t_2$ und $t_3$ auf Basis der bekannten Schallausbreitungsgeschwindigkeit der von den Ultraschallsensoren S1, S2, S3 bzw. SD ausgesandten Impulse eine genaue Längenbestimmung möglich ist. Die genaue Berechnung des Abstandes h bzw. des Seitenversatzes $y_1$ der Deichsel zu dem Kupplungsmaul 16 erfolgt in einfacher Weise für den Ultraschallsensor S3 durch die Beziehung

$$y_1{}^2 = l_1{}^2 - h^2 \, ,$$

bzw. für den Ultraschallsensor S2 durch die Beziehung

$$(x+y_1)^2 = l_2{}^2 - h^2 .$$

Durch Substraktion der zweiten Gleichung von der ersten Gleichung ergibt sich folgende Beziehung:

$$- 2xy_1 = l_1{}^2 - l_2{}^2 + x^2 .$$

Durch Umstellung dieser Gleichung erhält man den seitlichen Versatz des Ultraschallsensors SD und damit der Deichsel zum Ultraschallsensor S3. Es ergibt sich folgende Beziehung:

$$y_1 = \frac{l_2{}^2 - l_1{}^2 - x^2}{2x}$$

Für die Ermittlung des Abstandes h ist durch einfache Umstellung der ersten Gleichung die Beziehung

$$h = \sqrt{l_1{}^2 - y_1{}^2} \text{ aufzustellen.}$$

Da jedoch nun als Bezugspunkt für die Gesamtseitenabweichung die Lage des Ultraschallsensors S2 und damit des Kupplungsmauls 16 gilt, ist die gesamte Seitenabweichung wie folgt zu berechnen, wobei die Seitenabweichung gesamt mit y bezeichnet ist.

$$y = y_1 + x \text{ für } l1 < l3$$

$$y = - (y_1 + x) \text{ für } l1 > l3$$

Die gesamte hier erwähnte Ermittlung des Abstandes bzw. der Seitenabweichung der Deichsel von dem Kupplungsmaul 16 erfolgt in dem in Figur 1 gezeigten Steuergerät 10. Dieses zeigt in geeigneter Weise die tatsächliche Lage des Kupplungsmauls 16 zu der Deichsel auf der Anzeige 12 an, so daß ein das Kraftfahrzeug steuernder Fahrer durch entsprechende Lenk- bzw. Fahrreaktionen das Kraftfahrzeug so steuern kann, daß er auch ohne unmittelbare Sicht hinter den Heckbereich des Kraftfahrzeugs das Kupplungsmaul 16 sicher zu der Deichsel des Anhängers führen kann. Die beschriebene Möglichkeit des Aufbaus bzw. Wirkungsweise einer Ankuppelhilfseinrichtung ist prinzipiell auch mit nur zwei Ultraschallsensoren, die am Kraftfahrzeug angebracht sind, möglich. Der Einsatz der hier beschriebenen drei Ultraschallsensoren S1, S2, S3 gestattet jedoch die über die Ultraschallsensoren S1, S2, S3 gewonnenen Signale untereinander auf Plausibilität zu untersuchen, so daß eventuelle Störeinflüsse sicher vermieden werden können.

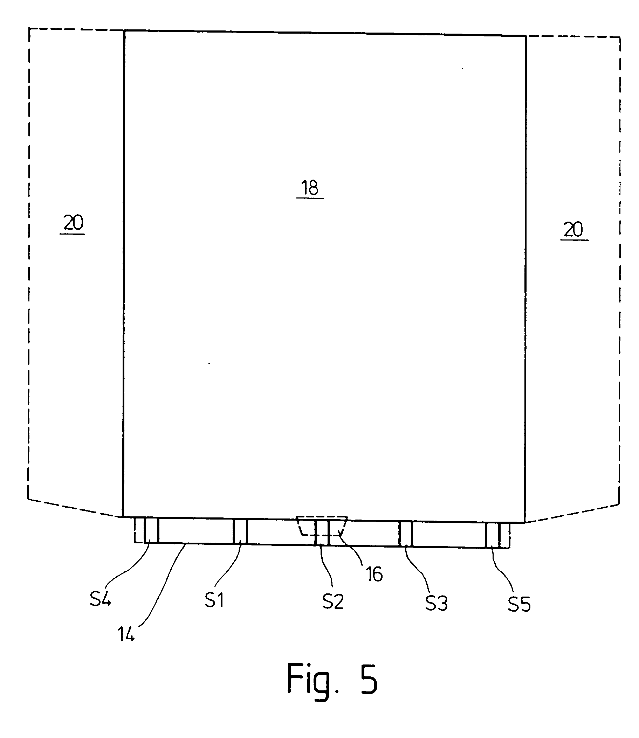

In der in Figur 5 schematisch dargestellten Übersicht wird verdeutlicht, daß durch die bereits in Figur 2 gezeigte Anordnung von weiteren Ultraschallsensoren S4 bzw. S5 der Meßbereich 18 seitlich jeweils um einen Meßbereich 20 vergrößert werden kann. Durch Erhöhung der Anzahl der an der Rückfahrschiene 14 des Kraftfahrzeugs angeordneten Ultraschallsensoren kann in einfacher Weise der Detektionsbereich der Seitenabweichung y vergrößert werden. Weiterhin ist durch die Plausibilitätsuntersuchung der von fünf Ultraschallsensoren gewonnenen Signale eine noch größere Genauigkeit hinsichtlich des genauen Zuführens des Kupplungsmauls 16 zu einer im gesamten Meßbereich 18 zuzüglich des Meßbereichs 20 angeordneten Deichsel möglich, wobei prinzipiell bereits mit der Anordnung von drei Ultraschallsensoren S1, S2, S3 eine an sich genügend große Genauigkeit erreicht werden kann.

Die Wirkungsweise bei der Anordnung von fünf Ultraschallsensoren ist analog der bereits beschriebenen Wirkungsweise mit drei Ultraschallsensoren und soll hier nicht weiter ausgeführt werden.

**Patentansprüche**

1. Rückfahr- und Ankuppelhilfseinrichtung, die auf einem Kraftfahrzeug und einer Deichsel eines Anhängers montiert ist, wobei am Kraftfahrzeug Sensoren (S1, S2, S3), ein Steuergerät (10) und eine Anzeige (12) angebracht sind, und an der Deichsel ein Sensor (SD) angebracht ist, dadurch gekennzeichnet, daß die Sensoren als Sende- und Empfangseinheiten (S1, S2, S3, SD) ausgebildet sind und daß diese Ultraschallsensoren sind.

2. Rückfahr- und Ankuppelhilfseinrichtung nach Anspruch 1, dadurch gekennzeichnet, daß der Ultraschallsensor an der Deichsel (SD) eine Zeitlaufsteuerung und eine eigene Stromversorgung besitzt.

3. Rückfahr- und Ankuppelhiltseinrichtung nach einem der vorhergehenden Ansprüche, dadurch gekennzeichnet, daß bei der Ankuppelhilfe der direkte (kürzeste) Laufweg des Impulses (I') zwischen dem Ultraschallsensor an der Deichsel (SD) und den am Kraftfahrzeug befestigten Ultraschallsensoren (S1, S2, S3) verwendet wird.

4. Rückfahr- und Ankuppelhilfseinrichtung nach einem der vorhergehenden Ansprüche, dadurch gekennzeichnet, daß das Kraftfahrzeug drei Ultraschallsensoren (S1, S2, S3) aufweist, von denen ein Ultraschallsensor (S2) genau in der Fahrzeugmitte einem Kupplungsmaul (16) zugeordnet ist.

5. Rückfahr- und Ankuppelhilfseinrichtung nach einem der Ansprüche 1 bis 3, dadurch gekennzeichnet, daß das Kraftfahrzeug fünf Ultraschallsensoren (S1 bis S5) aufweist, von denen ein Ultraschallsensor (S2) genau in der Fahrzeugmitte einem Kupplungsmaul (16) zugeordnet ist.

6. Rückfahr- und Ankuppelhilfseinrichtung nach einem der vorhergehenden Ansprüche, dadurch gekennzeichnet, daß die Ultraschallsensoren (S1, S2, S3) am Kraftfahrzeug so ausgebildet sind, daß sie zu einem Zeitpunkt ($t_s$) gleichzeitig einen Impuls (I) aussenden, den der Ultraschallsensor (SD) zu einem Zeitpunkt ($t_{Deichsel}$) erwidert.

7. Rückfahr- und Ankuppelhilfseinrichtung, nach einem der vorhergehenden Ansprüche, dadurch gekennzeichnet, daß der Impuls (I') des Ultraschallsensors an der Deichsel (SD) jeweils einen neuen Impuls der Ultraschallsensoren am Kraftfahrzeug (S1, S2, S3) auslöst.

8. Rückfahr- und Ankuppelhilfseinrichtung nach einem der vorhergehenden Ansprüche, dadurch gekennzeichnet, daß die Ultraschallsensoren am Kraftfahrzeug (S1, S2, S3) in bestimmten Zeitabständen selbsttätig einen Synchronisationsimpuls aussenden.

9. Rückfahr- und Ankuppelhilfseinrichtung nach einem der vorhergehenden Ansprüche, dadurch gekennzeichnet, daß die Ultraschallsenoren am Kraftfahrzeug (S1, S2, S3) in einem konstanten Abstand (x) zueinander angeordnet sind.

10. Rückfahr- und Ankuppelhilfseinrichtung nach einem der vorhergehenden Ansprüche, dadurch gekennzeichnet, daß die Steuereinrichtung (10) so ausgelegt ist, daß sie Signale der Ultraschallsensoren am Kraftfahrzeug (S1, S2, S3) auf Plausibilität bewertet.

**Claims**

1. Device for assisting in reversing and hitching up trailers, which device is mounted on a motor vehicle and on a shaft of a trailer, sensors (S1, S2, S3), a control unit (10) and a display (12) being provided on the motor vehicle, and a sensor (SD) being provided on the shaft, characterized in that the sensors are designed as transmitting and receiving units (S1, S2, S3, SD), and in that these are ultrasonic sensors.

2. Device for assisting in reversing and hitching up trailers according to Claim 1, characterized in that the ultrasonic sensor (SD) on the shaft has a time controller and its own power supply.

3. Device for assisting in reversing and hitching up trailers according to one of the preceding claims, characterized in that, in the device for assisting in hitching up trailers the direct (shortest) path of the pulse (I') between the ultrasonic sensor (SD) on the shaft and the ultrasonic sensors (S1, S2, S3) attached to the motor vehicle is used.

4. Device for assisting in reversing and hitching up trailers according to one of the preceding claims, characterized in that the motor vehicle has three ultrasonic sensors (S1, S2, S3), of which one ultrasonic sensor (S2) precisely in the centre of the vehicle is assigned to a coupling jaw (16).

5. Device for assisting in reversing and hitching up trailers according to one of Claims 1 to 3, characterized in that the motor vehicle has five ultrasonic sensors (S1 to S5), of which one ultrasonic sensor (S2) precisely in the centre of the vehicle is assigned to a coupling jaw (16).

6. Device for assisting in reversing and hitching up trailers according to one of the preceding claims, characterized in that the ultrasonic sensors (S1, S2, S3) on the motor vehicle are designed in such a way that they simultaneously transmit at a time ($t_s$) a pulse (I) which the ultrasonic sensor (SD) replies to at a time ($t_{shaft}$).

7. Device for assisting in reversing and hitching up trailers according to one of the preceding claims, characterized in that the pulse (I') of the ultrasonic sensor (SD) on the shaft triggers a new pulse of the ultrasonic sensors (S1, S2, S3) on the motor vehicle in each case.

8. Device for assisting in reversing and hitching up trailers according to one of the preceding claims, characterized in that the ultrasonic sensors (S1, S2, S3) on the motor vehicle automatically transmit a synchronization pulse at specific time intervals.

9. Device for assisting in reversing and hitching up trailers according to one of the preceding claims, characterized in that the ultrasonic sensors (S1, S2, S3) on the motor vehicle are arranged at a constant distance (x) from one another.

10. Device for assisting in reversing and hitching up trailers according to one of the preceding claims, characterized in that the control device (10) is configured in such a way that it assesses the plausibility of the signals of the ultrasonic sensors (S1, S2, S3) on the motor vehicle.

**Revendications**

1. Installation d'assistance aux manoeuvres de recul et d'attelage équipant un véhicule automobile et un timon de remorque, le véhicule comportant les capteurs (S1, S2, S3), un appareil de commande (10) et un moyen d'affichage (12) et le timon étant équipé d'un capteur (SD),
caractérisée en ce que
les capteurs sont réalisés sous la forme d'unités d'émission et de réception (S1, S2, S3, S4) et sont des capteurs à ultra-sons.

2. Installation d'assistance aux manoeuvres de recul et d'attelage selon la revendication 1,
caractérisée en ce que
le capteur à ultra-sons (SD) équipant le timon comporte une commande séquentielle et une alimentation électrique indépendante.

3. Installation d'assistance aux manoeuvres de recul et d'attelage selon l'une des revendications précédentes,
caractérisée en ce que
pour le moyen d'assistance aux manoeuvres d'attelage, on utilise le chemin direct (le plus court) de l'impulsion (I') entre le capteur à ultra-sons (SD) équipant le timon et les capteurs à ultra-sons (S1, S2, S3) équipant le véhicule.

4. Installation d'assistance aux manoeuvres de recul et d'attelage selon l'une quelconque des revendications précédentes,
caractérisée en ce que
le véhicule comporte trois capteurs à ultra-sons (S1, S2, S3), l'un des capteurs (S2) étant précisément au milieu du véhicule associé à un bec d'attelage (16).

5. Installation d'assistance aux manoeuvres de recul et d'attelage selon l'une quelconque des revendications 1 à 3,
caractérisée en ce que
le véhicule comporte cinq capteurs à ultra-sons (S1-S5) et un capteur à ultra-sons (S2) est situé précisément au milieu du véhicule au niveau d'un bec d'attelage (16).

6. Installation d'assistance aux manoeuvres de recul et d'attelage selon l'une quelconque des revendications précédentes,
caractérisée en ce que
les capteurs à ultra-sons (S1, S2, S3) équipant le véhicule sont réalisés pour émettre simultanément une impulsion (I) à un instant ($t_s$) auquel répond le capteur à ultra-sons (SD) à un instant ($t_{tim}$).

7. Installation d'assistance aux manoeuvres de recul et d'attelage selon l'une quelconque des revendications précédentes,
caractérisée en ce que
l'impulsion (I') du capteur à ultra-sons (SD) équipant le timon déclenche chaque fois une nouvelle impulsion par les capteurs à ultra-sons (S1, S2, S3) équipant le véhicule.

8. Installation d'assistance aux manoeuvres de recul et d'attelage selon l'une quelconque des revendications précédentes,
caractérisée en ce que
les capteurs à ultra-sons (S1, S2, S3) équipant le véhicule émettent à des intervalles de temps déterminés, automatiquement une impulsion de synchronisation.

9. Installation d'assistance aux manoeuvres de recul et d'attelage selon l'une quelconque des revendications précédentes,
caractérisée en ce que
les capteurs à ultra-sons (S1, S2, S3) équipant le véhicule sont montés à une distance constante (x).

10. Installation d'assistance aux manoeuvres de recul et d'attelage selon l'une quelconque des revendications précédentes,
caractérisée en ce que
l'installation de commande (10) est conçue pour exploiter des signaux des capteurs (S1, S2, S3) du véhicule et en contrôler la plausibilité.

Fig. 1

Fig. 2

Fig. 3

Fig. 4

20    18    20

S4    S1    S2    16    S3    S5

14

# Fig. 5